# FASCICULE DE BREVET EUROPEEN

(11) **EP 3 553 585 B1**
(45) Date de publication et mention de la délivrance du brevet: **21.09.2022**
(21) Numéro de dépôt: 18290029.0
(22) Date de dépôt: 09.04.2018
(51) Int. Cl.: G02B 27/01

(54) **SYSTÈME D'AFFICHAGE TÊTE-HAUTE**
HEAD-UP ANZEIGESYSTEM
HEAD-UP DISPLAY SYSTEM

(43) Date de publication de la demande: 16.10.2019
(73) Titulaire: Valeo Comfort and Driving Assistance, 94046 Créteil Cedex (FR)
(72) Inventeur: Delpierre, Laurent, 94046 Créteil Cedex (FR); Grandclerc, François, 94046 Créteil Cedex (FR); Le-Toumelin, Loic, 74321 Bietigheim-Bissingen (DE)
(74) Mandataire: Delplanque, Arnaud

(56) Documents cités:
- US-A1- 2016 048 020
- US-A1- 2017 235 139
- US-A1- 2017 307 885
- US-B1- 9 726 886

## Description

### DOMAINE TECHNIQUE AUQUEL SE RAPPORTE L'INVENTION

La présente invention concerne de manière générale le domaine des systèmes d'affichage tête-haute.

Elle concerne plus particulièrement un système d'affichage tête-haute comprenant :
- un dispositif de génération d'image conçu pour générer un faisceau lumineux, et
- un miroir de repliement disposé de manière à réfléchir le faisceau lumineux en direction d'une lame partiellement transparente.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à afficher des informations élémentaires (vitesse du véhicule, direction à suivre, ...) et des informations de sécurité (dysfonctionnement du moteur, présence d'obstacle, ...) à la hauteur du regard du conducteur.

Un tel afficheur tête-haute comprend généralement un dispositif de génération d'images qui produit des rayons lumineux transportant des images, et une lame partiellement transparente qui réfléchit ces rayons lumineux en direction du conducteur de manière à former des images virtuelles dans le champ de vision du conducteur. Les images virtuelles, comportant les informations à afficher, se superposent alors visuellement à l'environnement faisant face au véhicule.

Entre le dispositif de génération d'images et le combineur se situe généralement un dispositif de réflexion à un ou plusieurs miroirs plans ou concaves.

Pour que le conducteur puisse effectivement visualiser ces images virtuelles, ses yeux doivent être situés dans une zone de l'espace atteinte, en sortie de l'afficheur, par une partie au moins des rayons lumineux émis par l'unité de génération d'image.

Pour permettre au conducteur de visualiser de telles images virtuelles pour différents utilisateurs (de tailles différentes et dont les yeux sont donc différemment positionnés), il est connu de munir l'afficheur de moyens de rotation du ou des miroirs du dispositif de réflexion. Déplacer le ou les miroirs en rotation permet de décaler verticalement les rayons lumineux sortant de l'afficheur, pour adapter leur position (en sortie de l'afficheur) à celle des yeux du conducteur.

Cependant, les systèmes de l'art antérieur ne permettent pas d'adapter facilement la position des rayons lumineux de manière à celle des yeux du conducteur.

### OBJET DE L'INVENTION

Dans ce contexte, la présente invention propose un système d'affichage tête-haute tel que défini dans la revendication 1.

Selon l'invention ledit moyen de rotation est situé au niveau de la région de bord du support située à l'opposé de la lame partiellement transparente.

En permettant à l'utilisateur de déplacer le miroir de repliement autour d'un axe de rotation, le système d'affichage permet d'adapter facilement la position des rayons lumineux à n'importe quel utilisateur. De plus, le moyen de rotation étant situé à l'opposé de la lame partiellement transparente, il pourra être plus facilement dissimulé, par exemple au sein d'un boîtier renfermant le dispositif de génération d'image.

D'autres caractéristiques non limitatives et avantageuses du système d'affichage conforme à l'invention, prises individuellement ou selon toutes les combinaisons techniquement possibles, sont définies dans les revendications

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un système d'affichage tête-haute selon l'invention,
- la figure 2a représente un exemple de miroir de repliement du système d'affichage tête-haute,
- la figure 2b représente un autre exemple de miroir de repliement du système d'affichage tête-haute,
- la figure 3 représente le miroir de repliement disposé dans un boîtier du système d'affichage tête-haute, et
- la figure 4 représente un dispositif d'entrainement mécanique du miroir de repliement du système d'affichage tête-haute.

Par convention, dans la suite de la description, les termes « avant » et « arrière » seront définis par rapport au regard du conducteur tourné vers un afficheur tête haute en position normale d'utilisation dans un véhicule. Ainsi, le terme « avant » désignera le côté de l'afficheur tête haute le plus proche du conducteur, tandis que le terme « arrière » désignera le côté de l'afficheur tête à l'opposé de celui-ci, plus éloigné du conducteur.

Les termes « supérieur » et « inférieur » désigneront quant à eux les éléments décrits en position dans le véhicule automobile, par rapport à la direction verticale dudit véhicule automobile. La partie inférieure d'un élément désignera la partie de cet élément qui est située du côté du plancher du véhicule et la partie supérieure désignera la partie de cet élément qui est située du côté du toit.

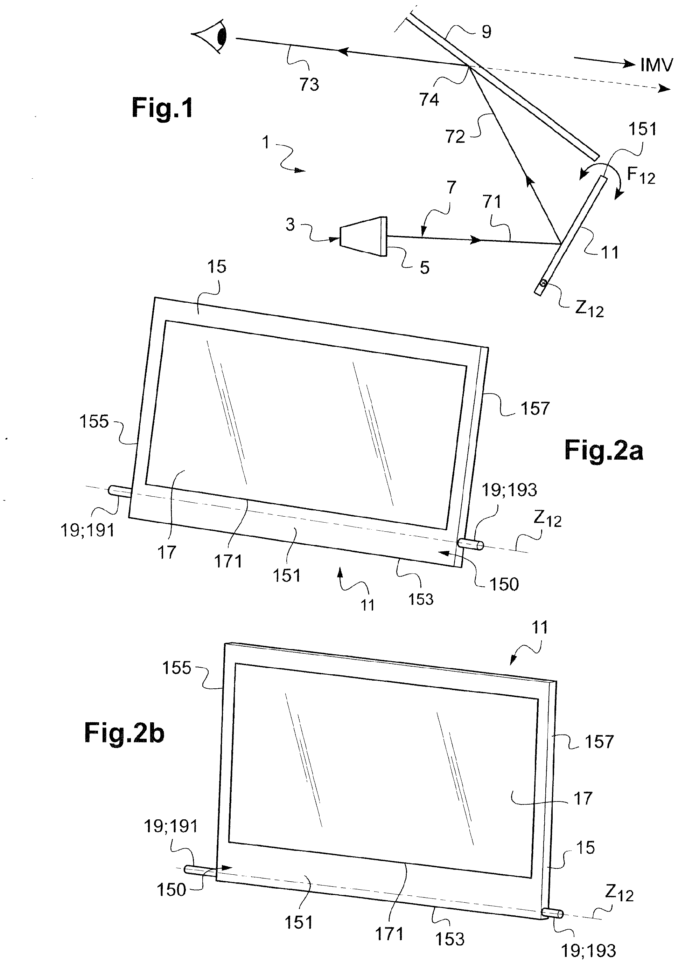

La figure 1 représente schématiquement système d'affichage tête-haute 1, destiné à équiper un véhicule, par exemple un véhicule automobile, un train, un bateau tel qu'une péniche, un tramway ou un bus.

Le système d'affichage tête-haute 1 comprend un dispositif de génération d'image 3 qui comporte un écran 5 duquel émerge un faisceau de rayons lumineux.

L'écran 5 est par exemple réalisé au moyen d'un écran à cristaux liquides ; le dispositif de génération d'image 3 comprend alors un système de rétro-éclairage de l'écran.

L'écran 5 peut aussi être réalisé au moyen d'un écran diffusant, au moins partiellement translucide, le dispositif de génération d'image 3 comprenant alors un système de balayage d'une face arrière de l'écran par un faisceau laser.

Le faisceau de rayons lumineux qui émerge de l'écran 5 présente un rayon principal 7. Ce rayon principal 7 est le rayon lumineux moyen défini par ce faisceau de rayon lumineux. En particulier, la direction du rayon principal correspond à la direction d'émission moyenne de l'indicatrice de rayonnement en sortie de l'écran 5.

Le rayon principal 7 est émis ici dans une direction déterminée donnée par rapport à l'écran 5 (par exemple perpendiculairement à l'écran 5).

Le dispositif de génération d'image 3 peut comprendre, en aval de l'écran, un ou plusieurs composants optiques optionnels (non représentés), tels qu'une fenêtre de protection ou un filtre polarisant.

Le système d'affichage tête-haute 1 comprend également un système optique de projection, projetant le faisceau de rayons lumineux émergeant de l'écran 5 vers une lame partiellement transparente 9.

Le système optique de projection comprend un miroir de repliement 11, disposé sur le trajet optique du faisceau de rayons lumineux de manière à réfléchir le faisceau lumineux en direction de la lame partiellement transparente 9. Ainsi, le miroir de repliement 11 est situé (sur le trajet optique du faisceau de rayons lumineux) entre l'écran 5 et la lame partiellement transparente 9.

On définit :
- une première partie 71 du rayon principal 7, s'étendant depuis l'écran 5 jusqu'au miroir de repliement 11,
- une deuxième partie 72 du rayon principal 7, s'étendant depuis le miroir de repliement 11 jusqu'à la lame partiellement transparente 9, et
- une troisième partie 73 du rayon principal 7, s'étendant à partir de la lame partiellement transparente 9 (en direction des yeux de l'utilisateur).

Le miroir de repliement 11 reçoit la première partie 71 du rayon principal 7 émergeant de l'écran 5 et la réfléchit directement en direction de la lame partiellement transparente 9 suivant la deuxième partie 72 du rayon principal 7. La lame partiellement transparente 9 reçoit le rayon principal en un point d'incidence 74.

Le miroir de repliement 11 est monté mobile en rotation par rapport au système d'affichage tête-haute 1, autour d'un premier axe de rotation Z₁₂. Le miroir de repliement 11 est monté mobile par rapport au système d'affichage tête-haute 1 en ce sens qu'il est monté mobile par rapport à un élément fixe de la structure du système d'affichage tête-haute 1, tel qu'un boîtier 13 ou un châssis du système d'affichage, comme expliqué plus loin. Le mouvement de rotation correspondant est symbolisé schématiquement par la flèche F₁₂ de la figure 1.

En faisant tourner le miroir de repliement 11 autour du premier axe de rotation Z₁₂, on varie la direction de propagation du rayon principal 7 dans le système d'affichage tête-haute 1, plus précisément, on varie la direction de la deuxième partie 72 du rayon principal 7. Ainsi, la position du point d'incidence 74 sur la lame partiellement transparente 9 varie selon les lois bien connues de la réflexion.

La lame partiellement transparente 9 réfléchit le faisceau de rayons lumineux qu'il reçoit, au moins partiellement, vers un utilisateur du système d'affichage suivant une troisième partie 73 de rayon principal 7 qui dépend de la direction de la deuxième partie du rayon 72 ainsi que de la position du point d'incidence 74.

Le système optique de projection forme ainsi, avec la lame partiellement transparente 9, une image virtuelle IMV. L'image virtuelle IMV se forme, par rapport à la lame partiellement transparente 9, à l'opposé de l'utilisateur dans l'alignement du point d'incidence (variable) 74. Ici, l'utilisateur correspond au conducteur du véhicule.

On comprend donc comment la rotation du miroir de repliement 11 permet de varier la position de l'image virtuelle IMV.

Comme la lame partiellement transparente 9 est partiellement transparente, elle permet à l'utilisateur de visualiser un environnement, par exemple un environnement routier.

L'image virtuelle IMV, formée par l'ensemble comprenant le système d'affichage tête-haute 1 et la lame partiellement transparente 9, se superpose ainsi visuellement à cet environnement, si bien que l'utilisateur peut la visualiser sans détourner son regard de l'environnement.

La lame partiellement transparente 9 est formée ici par une lame, éventuellement mobile, disposée entre le pare-brise et la position habituellement occupée par la tête de l'utilisateur. Cette lame est parfois appelée « combineur » (du mot anglais « combiner »).

Alternativement, la lame partiellement transparente 9 peut-être formée par le pare-brise du véhicule.

On décrit à présent plus en détails le miroir de repliement 11 en se référant à la figure 2a.

Le miroir de repliement 11 comprend un support 15 ayant la forme d'une plaque, ici rectangulaire. Le support 15 est fabriqué à partir d'un matériau mat. Une surface réfléchissante 17 est située sur une face 150 dudit support 15 dirigé vers la lame partiellement transparente 9.

Le miroir de repliement 11 présente une région de bord 151 du support 15 située à l'opposé de la lame partiellement transparente 9.

La surface réfléchissante 17 recouvre partiellement la face 150 dudit support 15 dirigée vers la lame partiellement transparente 9.

Ladite région de bord 151 du support 15 située à l'opposé de la lame partiellement transparente 9 correspond ainsi ici à une bande mate s'étendant entre une tranche 153 du support 15 dirigée à l'opposé de la lame partiellement transparente 9 et un bord 171 de la surface réfléchissante 17 dirigé à l'opposé de la lame partiellement transparente 9.

La région de bord 151 du support 15 située à l'opposé de la lame partiellement transparente 9 peut toutefois en pratique couvrir jusqu'à un tiers de la face 150 du support 15 dirigé vers la lame partiellement transparente 9.

Le miroir de repliement 11 peut être plat ou concave. De manière optionnelle, le miroir de repliement 11 peut être conformé de manière à ce que sa surface réfléchissante 17 compense des distorsions ou aberrations optiques qui pourraient être causées par la réflexion sur la lame partiellement transparente 9.

Le miroir de repliement 11 comprend en outre un moyen de rotation 19 permettant à l'utilisateur de pivoter ledit miroir de repliement 11 autour du premier axe de rotation Z₁₂.

Le moyen de rotation 19 est situé au niveau de la région de bord 151 du support 15 située à l'opposé de la lame partiellement transparente 9. Selon un exemple, le moyen de rotation 19 est situé au niveau du bord 171 de la surface réfléchissante 17 dirigé à l'opposé de la lame partiellement transparente 9. Selon un autre exemple illustré par la figure 2b, le moyen de rotation 19 est situé à niveau de la tranche 153 du support 15 dirigée à l'opposé de la lame partiellement transparente 9.

Le moyen de rotation 19 comprend une première tige191 faisant saillie d'une première tranche latérale 155 du support 15, ainsi qu'une deuxième tige 193 faisant saillie d'une deuxième tranche latérale 157 du support 15.

La première tige 191 et la deuxième tige 193 sont alignées de part et d'autre du miroir de repliement 11 de façon à définir le premier axe de rotation Z₁₂.

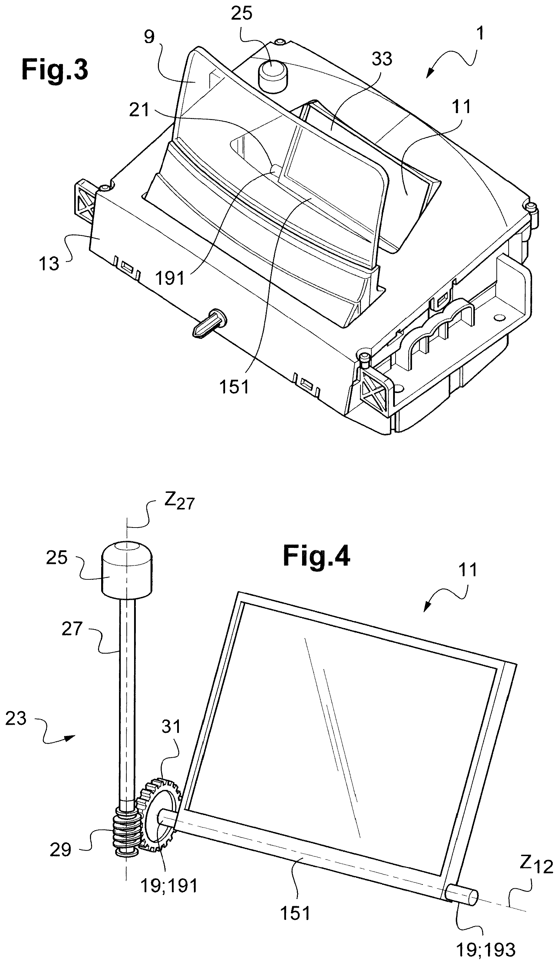

Comme le montre la figure 3, le miroir de repliement 11 est disposé dans un boîtier 13 qui délimite un logement de protection.

Le boîtier 13 est ici fixé de façon immobile dans le tableau de bord du véhicule. Il est par exemple réalisé en une matière plastique rigide et opaque.

Le dispositif de génération d'images 3 ainsi que le miroir de repliement 11 sont logés dans le boîtier 13. Ainsi, avantageusement, le boîtier 13 permet de protéger et de cacher les éléments optiques et le moyen de rotation du dispositif de génération d'image 3 ainsi que le miroir de repliement 11.

Comme illustré sur la figure 3, afin de permettre la rotation du miroir de repliement 11 dans le boîtier 13, le boîtier 13 présente un dispositif de réception 21, par exemple deux orifices de réception apte à accueillir la première tige191 respectivement la deuxième tige 193.

Une ouverture 33 est prévue sur une paroi supérieure du boîtier 13 pour laisser sortir les rayons lumineux réfléchis par le miroir de repliement 11 vers la lame partiellement transparente 9.

La lame partiellement transparente 9 (ou combineur) peut être mobile, par exemple montée mobile par rapport au boitier 13. La lame mobile est dans ce cas par exemple équipée d'un dispositif d'entrainement actionné manuellement ou piloté électriquement, par exemple par un moteur à courant continu ou un moteur pas à pas (non représenté). Ledit dispositif d'entrainement permet de régler l'orientation de la lame mobile afin de changer la position de l'image virtuelle.

Ici, la lame partiellement transparente 9 est fixe et ne peut pas être escamotée à l'intérieur du boîtier 13. Le volume ainsi économisé (volume habituellement consacré à la lame partiellement transparente 13 et à un dispositif d'entrainement mécanique permettant l'escamotage de la lame partiellement transparente 13) peut être utilisé pour la rotation du miroir de repliement 11, ou pour la disposition des composants optiques optionnels précédemment mentionnés.

Des moyens de manœuvre manuelle 23, 25 représentés en figure 4, permettent de déplacer le miroir de repliement 11 autour du premier axe de rotation Z₁₂.

Les moyens de manœuvre manuelle 23, 25 comprennent un bouton rotatif 25 et un dispositif d'entrainement mécanique 23. Le dispositif d'entrainement mécanique 23 est apte à déplacer le miroir de repliement 11 et est actionnable par le bouton rotatif 25.

Le dispositif d'entrainement mécanique 23 comprend deux parties. Une première partie est solidaire du bouton rotatif 25, et une deuxième partie est solidaire du miroir de repliement 11. Les deux parties sont couplées dans une liaison de type pignon/crémaillère.

Dans l'exemple décrit, le dispositif d'entrainement mécanique 23 comprend une tige 27 disposée sensiblement verticalement et présentant une extrémité supérieure et une extrémité inférieure.

L'extrémité supérieure de la tige 27 comprend le bouton rotatif 25. L'extrémité inférieure comprend un premier engrenage 29, par exemple une roue dentée ou une vis sans fin.

La tige 27 est apte à être mise en rotation autour d'un deuxième axe de rotation Z₂₇ par actionnement du bouton rotatif 25 par l'utilisateur. Le deuxième axe de rotation Z₂₇ est ici sensiblement vertical, c'est-à-dire perpendiculaire au premier axe de rotation Z₁₂.

Le dispositif d'entrainement mécanique 23comprend de plus un deuxième engrenage 31. Le deuxième engrenage 31 est solidaire du miroir de repliement 11. Par exemple le deuxième engrenage 31 est porté par la première tige 191 du moyen de rotation 19..

Le deuxième engrenage 31 comprend par exemple une crémaillère.

Le premier engrenage 29 est couplé avec le deuxième engrenage 31, ici selon une liaison du type pignon/crémaillère.

Quand l'utilisateur tourne le bouton rotatif 25 et entraîne ainsi en rotation le premier engrenage 29, le deuxième engrenage 31 se déplace vers l'avant ou vers l'arrière (selon une direction perpendiculaire au premier axe de rotation Z₁₂ et au second axe de rotation Z₂₇) en fonction du sens de rotation du bouton rotatif 25, et le miroir de repliement 11 tourne ainsi vers l'avant ou vers l'arrière autour du premier axe de rotation Z₁₂.

Grâce au dispositif d'entrainement mécanique 23 actionné manuellement par le bouton rotatif 35, l'utilisateur peut donc opérer un réglage fin de la position verticale de l'image virtuelle IMV afin qu'elle satisfasse au mieux ses besoins.

Enfin, la tige 27 traverse la paroi supérieure du boîtier 13 par une deuxième ouverture. Ainsi, le bouton rotatif 25 est saillant du boîtier 13 et facilement accessible à l'utilisateur.

Le bouton rotatif 25 est d'ailleurs ici monté en rotation dans le boîtier 13 afin de permettre de régler la position de l'image IMV comme décrit précédemment.

## Revendications

1. Système d'affichage tête-haute (1) comprenant :
- un dispositif de génération d'image (3) conçu pour générer un faisceau lumineux, et
- un miroir de repliement (11) disposé de manière à réfléchir le faisceau lumineux en direction d'une lame partiellement transparente (9),
ledit miroir de repliement comprenant un support (15) et un moyen de rotation (19) autour d'un axe de rotation (Z12), ledit support (15) présentant d'une part, une région de bord supérieure proche de la lame partiellement transparente (9), et d'autre part, une région de bord (151) inférieure opposée à la région de bord supérieure
**caractérisé en ce que** ledit moyen de rotation (19) est situé au niveau de la région de bord (151) inférieure du support (15) et **en ce que** ledit système d'affichage comprend en outre des moyens de manœuvre manuelle (23, 25) du miroir de repliement (11), lesdits moyens de manœuvre manuelle (23, 25) comprenant un dispositif d'entrainement mécanique (23) apte à déplacer le miroir de repliement (11) autour de l'axe de rotation et **en ce que** les moyens de manœuvre manuelle (23, 25) comprennent un bouton rotatif (25) disposé à une extrémité supérieure d'une tige (27), l'extrémité inférieure de la tige (27) comprenant un premier engrenage (29) couplé à un deuxième engrenage (31) solidaire du miroir de repliement (11).

2. Système d'affichage tête-haute (1) selon la revendication 1, dans lequel le miroir de repliement (11) comprend une tranche (153) située au niveau bord inférieur du support (15) et une surface réfléchissante (17), ladite surface réfléchissante (17) présentant un bord (171) de la surface réfléchissante (17) située au niveau bord inférieur du support (15), la région de bord inférieure (151) s'étendant entre la tranche (153) et le bord (171).

3. Système d'affichage tête-haute (1) selon la revendication 1 ou 2, dans lequel la région de bord inférieure (151) s'étend sur un tiers d'une face (150) de la région de bord inférieure (151) à partir de la tranche (153) du support (15).

4. Système d'affichage tête-haute (1) selon l'une des revendications 1 à 3, dans lequel le moyen de rotation (19) comprend une première tige (191) faisant saillie d'une première tranche latérale (155) du support (15) et une deuxième tige (193) faisant saillie d'une deuxième tranche latérale (157) du support (15).

5. Système d'affichage tête-haute (1) selon l'une des revendications 1 à 4, dans lequel la première tige (191) et la deuxième tige (193) sont alignées de façon à définir l'axe de rotation.

6. Système d'affichage tête-haute (1) selon l'une des revendications 1 à 5, dans lequel le miroir de repliement (11) est plan.

7. Système d'affichage tête-haute (1) selon l'une des revendications 1 à 6, dans lequel la lame partiellement transparente (9) est fixe.

## Patentansprüche

1. Head-up-Anzeigesystem (1), das enthält:
- eine Bilderzeugungsvorrichtung (3), die konzipiert ist, ein Lichtbündel zu erzeugen, und
- einen Umlenkspiegel (11), der angeordnet ist, um das Lichtbündel in Richtung einer teilweise transparenten Platte (9) zu reflektieren,
wobei der Umlenkspiegel einen Träger (15) und eine Dreheinrichtung (19) um eine Drehachse (Z12) enthält, wobei der Träger (15) einerseits einen oberen Randbereich nahe der teilweise transparenten Platte (9) und andererseits einen unteren Randbereich (151) entgegengesetzt zum oberen Randbereich enthält,
**dadurch gekennzeichnet, dass** die Dreheinrichtung (19) sich im Bereich des unteren Randbereichs (151) des Trägers (15) befindet, und dass das Anzeigesystem außerdem Einrichtungen zur manuellen Bedienung (23, 25) des Umlenkspiegels (11) enthält, wobei die Einrichtungen zur manuellen Bedienung (23, 25) eine mechanische Antriebsvorrichtung (23) enthalten, die den Umlenkspiegel (11) um die Drehachse verschieben kann, und dass die Einrichtungen zur manuellen Bedienung (23, 25) einen Drehknopf (25) enthalten, der an einem oberen Ende einer Stange (27) angeordnet ist, wobei das untere Ende der Stange (27) eine erste Verzahnung (29) enthält, die mit einer fest mit dem Umlenkspiegel (11) verbundenen zweiten Verzahnung (31) gekoppelt ist.

2. Head-up-Anzeigesystem (1) nach Anspruch 1, wobei der Umlenkspiegel (11) eine im Bereich des unteren Rands des Trägers (15) befindliche Kante (153) und eine reflektierende Fläche (17) enthält, wobei die reflektierende Fläche (17) einen im Bereich des unteren Rands des Trägers (15) befindlichen Rand (171) der reflektierenden Fläche (17) aufweist, wobei der untere Randbereich (151) sich zwischen der Kante (153) und dem Rand (171) erstreckt.

3. Head-up-Anzeigesystem (1) nach Anspruch 1 oder 2, wobei der untere Randbereich (151) sich über ein Drittel einer Seite (150) des unteren Randbereichs (151) ausgehend von der Kante (153) des Trägers (15) erstreckt.

4. Head-up-Anzeigesystem (1) nach einem der Ansprüche 1 bis 3, wobei die Dreheinrichtung (19) eine erste Stange (191), die von einer ersten Seitenkante (155) des Trägers (15) vorsteht, und eine zweite Stange (193) enthält, die von einer zweiten Seitenkante (157) des Trägers (15) vorsteht.

5. Head-up-Anzeigesystem (1) nach einem der Ansprüche 1 bis 4, wobei die erste Stange (191) und die zweite Stange (193) fluchtend ausgerichtet sind, um die Drehachse zu definieren.

6. Head-up-Anzeigesystem (1) nach einem der Ansprüche 1 bis 5, wobei der Umlenkspiegel (11) eben ist.

7. Head-up-Anzeigesystem (1) nach einem der Ansprüche 1 bis 6, wobei die teilweise transparente Platte (9) ortsfest ist.

## Claims

1. Head-up display system (1) comprising:
- an image generation device (3) designed to generate a beam of light, and
- a folded-optics mirror (11) positioned in such a way as to reflect the beam of light towards a partially transparent beam splitter (9),
said folded-optics mirror comprising a support (15) and a means (19) of rotation about an axis of rotation (Z12), said support (15) having, on the one hand, an upper edge region close to the partially transparent beam splitter (9) and, on the other hand, a low-edge region (151) opposite to the upper edge region
**characterized in that** said means (19) of rotation is situated in the lower edge region (151) of the support (15) and **in that** said display system further comprises manual-manoeuvring means (23, 25) for manually manoeuvring the folded-optics mirror (11), said manual-manoeuvring means (23, 25) comprising a mechanical drive device (23) able to move the folded-optics mirror (11) about the axis of rotation and **in that** the manual-manoeuvring means (23, 25) comprise a rotary knob (25) arranged at an upper end of a rod (27), the lower end of the rod (27) comprising a first gear (29) coupled to a second gear (31) secured to the folded-optics mirror (11) .

2. Head-up display system (1) according to Claim 1, wherein the folded-optics mirror (11) comprises an edge face (153) situated at the lower edge of the support (15), and a reflective surface (17), said reflective surface (17) having one edge (171) of the reflective surface (17) situated level with the lower edge of the support (15), the lower edge region (151) extending between the edge face (153) and the edge (171).

3. Head-up display system (1) according to Claim 1 or 2, wherein the lower edge region (151) extends over one third of one face (150) of the lower edge region (151) from the edge face (153) of the support (15).

4. Head-up display system (1) according to one of Claims 1 to 3, wherein the rotation means (19) comprises a first rod (191) projecting from a first lateral edge face (155) of the support (15) and a second rod (193) projecting from a second lateral edge face (157) of the support (15).

5. Head-up display system (1) according to one of Claims 1 to 4, wherein the first rod (191) and the second rod (193) are aligned so as to define the axis of rotation.

6. Head-up display system (1) according to one of Claims 1 to 5, in which the folded-optics mirror (11) is flat.

7. Head-up display system (1) according to one of Claims 1 to 6, wherein the partially transparent beam splitter (9) is fixed.
